# EUROPEAN PATENT APPLICATION

(11) **EP 4 729 377 A1**
(43) Date of publication of application: **22.04.2026**
(21) Application number: 24207876.4
(22) Date of filing: 21.10.2024
(51) Int. Cl.: B60T 8/32, B60T 8/17, B60T 8/36, B60T 13/66, B60T 13/68, B60T 7/20, B60T 13/26, B60T 15/20

(54) **TRAILER CONTROL VALVE AND METHOD FOR CONTROLLING A TRAILER BRAKE PRESSURE**

(71) Applicant: KB Intellectual Property GmbH & Co. KG, 82049 Pullach (DE)
(72) Inventor: Wieder, Gerhard, 74354 Besigheim (DE); Hecker, Falk, 71706 Markgröningen (DE); Mustapha, Adnan, 75433 Maulbronn (DE); Yildirim, Muhammet, 75417 Mühlacker (DE)

(57) **Abstract**

A trailer control valve (300) for a towing vehicle of a trailer is disclosed. The trailer control valve (300) comprising a pneumatic input port (310) for receiving a control pressure (101); an electronic input port (320) for receiving an electronic brake signal (150); a pressure sensor (330); a relay valve relay valve (340) with a control port (345); a first solenoid valve (350) and a second solenoid valve (360); a pressure supply port (370); and a trailer coupling terminal (380) for providing a brake pressure and/or a supply pressure to the trailer. The first solenoid valve (350) and the second solenoid valve (360) are arranged to forward, in a primary mode, the control pressure (101) to the control port (345) of the relay valve (340), and to interrupt, in a secondary mode, the control pressure (101) and to connect the control port (345) of the relay valve (340) to the pressure supply port (370) based on the electronic brake signal (150) and an actual pressure sensed by the pressure sensor (330)

## Description

The present invention relates to a trailer control valve, an electronic brake system and a method for controlling a trailer brake pressure.

Commercial vehicles are required to have two brake circuits that are separated from each other. For example, one circuit controls the front axle and one the rear axle. Electronic brake systems, EBS, control electronically a brake pressure at axles or wheels utilizing at least one electronic pressure module (or an electro-pneumatic modulator), EPM. In an EBS system, the driver's request is determined electronically by means of a position or stroke sensor in a foot brake module (FBM) and transmitted to a braking algorithm to calculate the target pressures which is transmitted electronically to pressure control units to apply the target pressure to the brake cylinders.

Conventional EBSs include, in addition to the electronic control channel, two independent pneumatic control channels to provide two control pressures for the two independent circuits as backup control when the electronic control of the EBS exhibits a failure (e.g. a malfunctioning of one component). Moreover, conventional EBSs have an EPM at the front axle and an EPM for the rear axle(s). A trailer (semi-trailer or drawbar trailer) coupled to the vehicle is controlled in conventional EBSs by a Trailer Control Module (TCM), which integrates an electronic pressure control and a parking brake function for the trailer, wherein the conventional TCMs have also two pneumatic control circuits for the service brake.

However, due to the multiple control circuits, these conventional EBSs are expensive and there is a demand to use components in the EBS which overcomes these disadvantages while fulfilling all regulatory requirements and relying on less expensive components which are moreover easily to implement (e.g., use available components on vehicle) and do not need additional installation space.

At least some of these problems are overcome by a trailer control valve of claim 1 or by a method according to claim 14. The dependent claims refer to further advantageous realizations of the subject matters of the independent claims.

The present invention relates to a trailer control valve for a towing vehicle that can be coupled to a trailer. The trailer control valve comprises a pneumatic input port for receiving a control pressure; an electronic input port for receiving an electronic brake signal; a pressure sensor; a relay valve with a control port; a first solenoid valve and a second solenoid valve; a pressure supply port; and a trailer coupling terminal for providing a brake pressure and/or a supply pressure to the trailer. The first solenoid valve and the second solenoid valve are arranged to forward, in a primary mode, the control pressure to the control port of the relay valve. The first solenoid valve and the second solenoid valve are further arranged to interrupt, in a secondary mode, the control pressure and to connect the control port of the relay valve to the pressure supply port based on the electronic brake signal and an actual pressure sensed by the pressure sensor.

The term "connected" shall be construed broadly and include a fluid connection to provide a pneumatic channel for compressed air (control pressure or supply pressure). Based on further valves this connection may be open or closed. The secondary mode may be a backup mode which is employed in the event of any failure in performing the primary mode (e.g. in one of the components). Embodiments may use a corresponding detector to detect the malfunctioning or an insufficiency in at least one of the components. All components of the trailer control valve may be integrated in one housing. There is no need to have a controller included in the trailer control valve, respective control signals can be received from an external controller.

Optionally, the first solenoid valve and the second solenoid valve are monostable valves controllable via the electronic input port to allow a stable position and an activated position. The first solenoid valve may be a 2/2-valve with a first port connected with pneumatic input port and a second port. The first port may be connected with the second port in the stable position and may be disconnected in the activated position. The second solenoid valve may be a 3/2-valve with a first port connected with second port of the first solenoid valve, a second port connected with the control port of the relay valve, and a third port connected with the pressure supply port. The second solenoid valve may be adapted to connect its first port with its second port in its stable position, and to connect its third port with its second port in its activated position.

It is understood that ports which are not connected with other ports can be blocked or closed. A monostable valve has only one stable position. For all other positions it needs to be energized.

Optionally, the first solenoid valve and the second solenoid valve are monostable valves controllable via the electronic input port to allow a stable position and an activated position. Then, the first solenoid valve may be a 2/2-valve with a first port connected with pneumatic input port and a second port connected with the control port of the relay valve. The first solenoid valve may be adapted to connect its first port with its second port in its stable position, and to disconnect its first port and its second port in its activated position. The second solenoid valve may be a 2/2-valve with a first port connected with the second port of the first solenoid valve, a second port connected with the pressure supply port. The second solenoid valve may be adapted to disconnect its first port and its second port in its stable position, and to connect its first port with its second port in its activated position.

The electronic input port can be configured to receive multiples electronic signals, e.g. through multiple lines in parallel or serially along one line.

Optionally, the relay valve comprises an exhaust port to exhaust the trailer coupling terminal based on a pressure at the control port. The trailer control valve may be adapted to exhaust the control port only through the pneumatic input port. Therefore, the TCV may not have any further exhaust ports. In other words, any exhaustion of the control port of the relay valve has to go through the pneumatic input port which sets a lower limit for exhaustion.

Optionally, the trailer control valve further comprises a parking brake input port for receiving a parking brake request. The parking brake input port may be adapted to activate the relay valve to provide a parking brake function for the trailer. The parking brake function may activate the brake at the trailer independently from the activation at the pneumatic input port (i.e. independently from the received control pressure, e.g. from the FBM).

Embodiments relate also to a brake system, in particular an electronic brake system, for a commercial vehicle adapted to couple to a trailer. The brake system comprises a trailer control valve as described in this disclosure, and a brake controller configured to provide the electronic brake signal based on a brake request.

Optionally, the brake system comprises a foot brake module, FBM, and a pressure control module, PCM. The FBM may comprise a pneumatic output port and an input interface for receiving the brake request. The FBM may be configured to generate the control pressure at the pneumatic output port based on the brake request. The PCM comprises a first channel port, a second channel port, and a pneumatic backup port. The first channel port may be configured to provide a first channel output, the second channel port may be configured to provide a second channel output. The pneumatic backup port may be fluidly connectable to the first channel port and/or to the second channel port to provide a pneumatic backup brake control based on the control pressure. The PCM may be an electronic pressure module (or an electro-pneumatic modulator), EPM.

The brake request can also come from a driver of the vehicle. The brake request can also be an external brake request originating from an external controller such as antilock brake system (ABS), an electronic stability program (ESP), an adaptive cruise control (ACC), a hill-start aid (HSA), a traction control system (TCS) or any other controller or electronic control unit, ECU, in the vehicle. For this, the brake system may comprise an interface to a vehicle network for receiving external brake requests. The external controller may be another brake controller to control the brake pressure of the trailer based on an electronic brake signal at the electronic input port and utilizing the pressure sensor to set the brake pressure of the trailer to a target value, the electronic brake signal may be generated by the FBM.

Optionally, the commercial vehicle includes at least one front axle and at least one rear axle. The first channel port may be configured to provide the first channel output for one side of the at least one rear axle. The second channel port may be configured to provide the second channel output for the other, opposite side of the at least one rear axle. The brake system may further comprise a front axle modulator with an input port and a relay valve with a control port connected to the input port to control a brake pressure on the front axle(s). The input port may be connected with the pneumatic output port of the FBM.

Therefore, the EBS provides two separate brake circuits, a first brake circuit may serve the front axle(s), and a second brake circuit may server for rear axle(s).

Optionally, the front axle modulator includes a pressure supply port, a first solenoid valve to open and/or close the input port, and a second solenoid valve to open and/or close the pressure supply port. The first solenoid valve and the second first solenoid valve can be arranged as a serial connection or as a parallel connection and are configured to forward, in the primary mode, the control pressure to the control port of the relay valve, and, in the secondary mode, to interrupt the control pressure and to connect the control port of the relay valve to the pressure supply port based on the electronic brake signal(s).

The front axle modulator may comprise a pressure sensor to allow a pure electronic control of the brake pressure at the front axle.

Optionally, the PCM includes a first pressure sensor for sensing a pressure at the first channel port, a second pressure sensor for sensing a pressure at the second channel port, a first relay valve, a second relay valve, and an inlet for a second supply pressure. The first relay valve may be configured to provide a first target brake pressure for the first channel port utilizing the second supply pressure and the first pressure sensor. The second relay valve may be configured to provide a second target brake pressure for second channel port utilizing the second supply pressure and the second pressure sensor.

Optionally, the PCM includes an (integrated) electronic controller configured to receive the electronic brake signal and to generate a target pressure (e.g. the first/second target pressure) at the first channel output and/or at the second channel output based on the electronic brake signal(s). This may be the primary operation mode, wherein the target pressure(s) may be adjusted utilizing sensed pressures by the pressure sensors. The PCM may further be configured to connect the pneumatic backup port with the first channel port and/or with the second channel port only when the electronic controller is unable to generate the first channel output and/or the second channel output based on the electronic brake signal. Thus, the pneumatic control may be the backup mode if there is a malfunctioning the primary mode of operation.

Optionally, the brake system comprises further one or more or all of the following:
- a first air reservoir for supplying a first supply pressure to the FBM and to the front axle modulator,
- a second air reservoir for supplying a second supply pressure to the PCM,
- a third air reservoir for providing a third supply pressure as pressure supply for the TCV,
- one or more wheel speed sensors for determining one or more respective wheel speeds at the front axle and/or wheel speeds at the at least one rear axle,
- one or more brake pad wear sensors for determining one or more respective brake pad wear values at the front axle(s) and/or at the at least one rear axle,
- one or more pressure control valves, PCV, at the front axle(s), each PCV is configured to adjust a pressure at a respective wheel.

Embodiments relates also to a vehicle, in particular a commercial vehicle configured to couple to at least one trailer, with a brake system as described before.

Embodiments relates also to a method for controlling a trailer brake pressure in a commercial vehicle with a trailer control valve, TCV, as described in this disclosure. The method includes the steps of
- receiving a control pressure at an input port of a trailer control valve based on the brake request in a primary mode; and
- pneumatically controlling a brake pressure of the trailer by the control pressure in the primary mode of operation; or
- receiving an electronic control signal in the secondary mode of operation; and
- electronically controlling the brake pressure of the trailer based on the received electronic brake signal to a target value in the secondary mode of operation,
wherein the electronic brake signal is an external brake request or is generated by the FBM.

It is understood that the method steps do not need to be executed simultaneously but can be performed at different times. In particular, at a given moment in time, the TCV may operate either in the primary mode or in the secondary mode.

Optionally, the received electronic control signal can be adapted to trigger at least one of the following:
- activating the second solenoid valve to provide a brake pressure to the trailer independently from the control pressure at the input port;
- activating the first solenoid valve to decouple the control pressure and activating the second solenoid valve at least once to set a predetermined brake pressure.

The step of activating the second solenoid valve may be utilized not to slow down the vehicle, but to stabilize the vehicle combination (e.g. stretch braking). The step of activating the first solenoid valve may be utilized set a predetermined braking force during a stop (e.g. to keep the vehicle combination at a standstill). Thus, according to embodiments, the TCL allows various functions:
- brake pressure control by the driver,
- a pressure increase from the system,
- blocking or hold function from the system,
- release the pressure to the level of the input pressure from driver.

Optionally, if a malfunctioning prevents the primary mode of operation, the secondary mode of operation including the steps:
- pneumatically connecting a pneumatic backup port of the PCM with the first channel port and/or with the second channel port;
- providing a pneumatic backup brake control based on the control pressure.

Embodiments provide a cost-efficient EBS by replacing a conventional pneumatic TCV by a pneumatic TCV which is supplemented by an electronic control option as backup brake control which uses an additional pressure sensor to provide a desired target pressure. This provides the advantage that FBM with only one pneumatic channel can be used - instead of the more expensive pneumatic two-channel FBMs. A further advantage relates to the fact that the TCV does not need to have any controller but can nevertheless provide an electronic backup control option. This, in turn, provides the advantage that the TCV does not need to have two pneumatic channels. Embodiments make use of these advantages.

Some examples of the brake system and/or methods will be described in the following by way of examples only, and with respect to the accompanying figures, in which:
- Fig. 1: depicts a trailer control valve according to an embodiment of the present invention.
- Fig. 2: depicts further details of the trailer control valve according to further embodiments.
- Fig. 3: depicts an electronic brake system for a commercial vehicle according to embodiments.
- Fig. 4: shows a schematic flow chart for a method of controlling a trailer brake pressure according to embodiments.

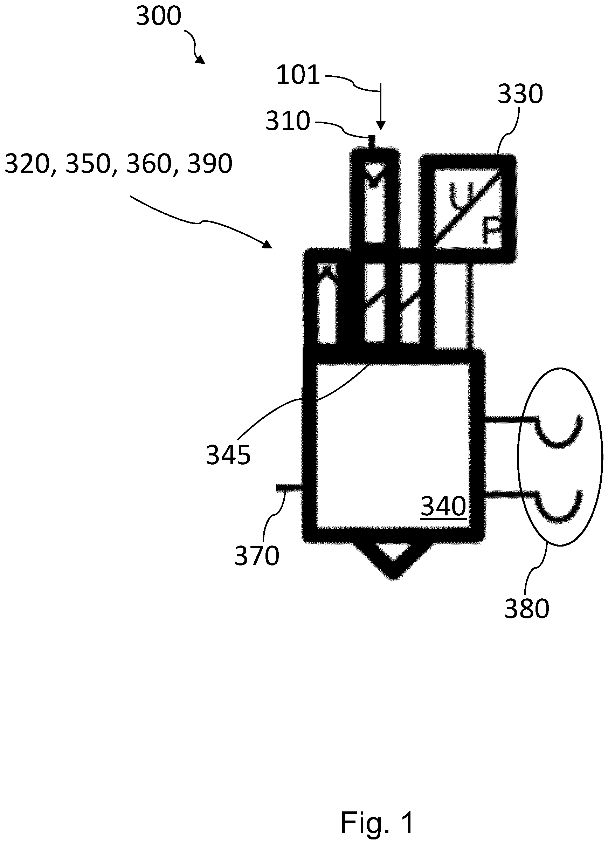

**Fig. 1** depicts a trailer control valve, TCL, 300 according to an embodiment. It can be used for a commercial vehicle which is adapted to tow a trailer, wherein the TCL 300 provides a control for a pneumatic trailer brake. The TCL 300 comprises:
- a pneumatic input port 310 for receiving a (pneumatic) control pressure 101,
- an electronic input port 320 for receiving an electronic brake signal 150 (e.g. from a brake controller),
- a pressure sensor 330 (e.g. for the pneumatic brake pressure),
- a relay valve 340 with a control port 345,
- a first solenoid valve 350 and a second solenoid valve 360,
- a pressure supply port 370, and
- trailer coupling terminals 380 for providing a brake pressure and/or a supply pressure to the trailer.

The first solenoid valve 350 and the second solenoid valve 360 are arranged or configured
in a primary mode: to forward the control pressure 101 to the control port 345 of the relay valve 340, and
in a secondary mode: to interrupt the control pressure 101 and to connect the control port 345 of the relay valve 340 to the pressure supply port 370 based on the electronic brake signal 150 and an actual pressure sensed by the pressure sensor 330.

The primary mode may be the mode of operation in case the brake system and/or the TCL 300 operate correctly (no detected malfunctioning). On the other hand, the secondary mode may be employed as backup mode in case a failure or a malfunctioning has been detected at least in one component of the brake system. The detected malfunction may relate to another component (not necessarily the TCL 300) such as a faulty pneumatic part of the FBM which may prevent a correct generation of the control pressure 101 and may thus jeopardize a correct brake actuation. In such situations, when there is a risk of a not reliable operation, the brake system may switch to the backup (secondary) mode, or the backup mode may be triggered automatically.

As indicated in Fig. 1, all components may be integrated in one housing (or as one unit). However, the TCL 300 does not need to have a controller included. The electronic control signal 150 can be received from an external controller (e.g. a brake controller or any other vehicle electronic control unit, ECU).

The TCL 300 may further comprise a parking brake input port 390 for receiving a parking brake request. The parking brake input port 390 may be adapted to activate the relay valve 340 to provide a parking brake function for the trailer, wherein the parking brake function may activate the brake at trailer independently from a control pressure 101 (e.g. from a foot brake module) at the pneumatic input port 310.

The relay valve 340 in the TCL 300 may comprise trailer coupling terminals 380 and an exhaust port 343 to exhaust the trailer coupling terminals 380 based on a pressure at the control port 345. The trailer coupling terminals 380 may include a line for a brake pressure to the trailer (or a corresponding control pressure) and a pressure supply line.

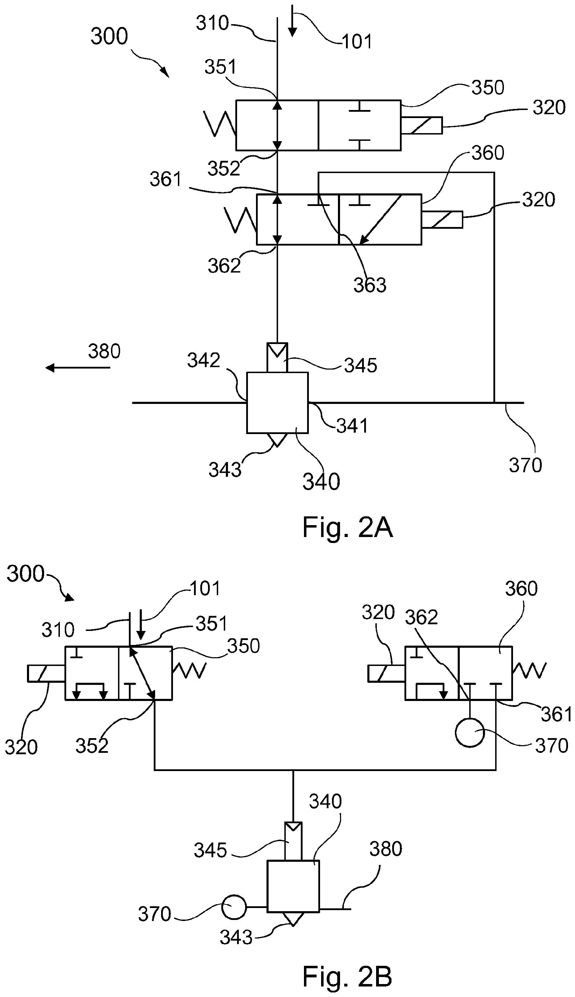

**Fig. 2A, 2B** depict further details of the TCL 300 according to further embodiments. In both embodiments, the first solenoid valve 350 and the second solenoid valve 360 are monostable valves controllable via the electronic input port 320 to allow a stable position and an activated position. The activated position corresponds to an energized state where an electric signal is applied to the respective electronic input ports 320 to generate a magnet field that triggers the switching. The stable position is the position where no energy is applied to the electronic control ports 320. This stable position is predefined, e.g. by a spring force that moves the valves in the stable position when no energy is applied to the electronic control inputs (e.g. at the respective coils). The activated position is thus instable in that in the absent of energy, the valves will automatically return to their stable position (energy is needed to keep the activated state).

In the embodiments of **Fig. 2A****,** the first solenoid valve 350 is a 2/2-valve with a first port 351 and a second port 352. The first port 351 is connected with the pneumatic input port 310. In addition, in the stable position, the first port 351 is connected with the second port 352. In the activated position, the first port 351 (and thus the pneumatic input port 310) is disconnected or blocked (fluidly closed).

According to this embodiment, the second solenoid valve 360 is a 3/2-valve with a first port 361, a second port 362, and a third port 363. The first port 361 is connected with second port 352 of the first solenoid valve 350. The second port 362 is connected with the control port 345 of the relay valve 340. The third port 363 is connected with the pressure supply port 370. In its stable position, the second solenoid valve 360 connects its first port 361 with its second port 362. In its activated position, the second solenoid valve 360 connects its third port 363 with its second port 362.

In the embodiments of **Fig. 2B****,** the first solenoid valve 350 may be again a 2/2-valve with a first port 351 connected with pneumatic input port 310 and a second port 352. However, in this embodiment, the second port 352 is connected with the control port 345 of the relay valve 320. In its stable position, the first port 351 is connected with the second port 352. In its activated position, the first port 351 is disconnected or blocked (fluidly closed).

According to the embodiment of **Fig. 2B****,** the second solenoid valve 360 is a 2/2-valve with a first port 361 connected with second port 352 of the first solenoid valve 350, a second port 362 connected with the pressure supply port 370. In its stable position, the second solenoid valve 360 disconnects its first port 361 and its second port 362. In its activated position, the second solenoid valve 360 connects its first port 361 with its second port 362.

According to both embodiments, the TCV 300 includes only one exhaust port, namely the exhaust 343 of the relay valve 340 which is configured to exhaust the brake pressure in the trailer (i.e. to exhaust at least one of the trailing coupling terminals 380). However, the control port 345 can only be exhausted through the control pressure 101 at pneumatic input port 310. Thus, the pressure applied at the pneumatic input port 310 sets a lower limit for exhaustion. However, this pressure value may be set to zero by some other exhaust port in the brake system (e.g. upstream from the TCL 300).

Further embodiments relate also to a brake system (e.g. an electronic brake system, EBS) for a commercial vehicle connectable with a trailer, which includes the TCL 300 as described before. The brake system may also comprise a brake controller configured to provide the electronic brake signal 150 based on brake request. The brake request may come from a driver of the vehicle. The brake controller may be configured to control the brake pressure of the trailer based on an electronic brake signal 150 at the electronic input port 320 and utilizing the pressure sensor 330 to set the brake pressure of the trailer to a target value. The electronic brake signal 150 may be generated by the FBM 100 (e.g. based on a pedal position sensed by a stroke sensor). Additionally, or alternatively, the brake request may also be an external brake request in that it originates from an external unit or an assist or stability system such as an intervention of the ESP, ACC, HSA, TCS, ABS etc.

Therefore, according to embodiments, the controlling of the trailer brake pressure in the commercial vehicle can be performed in that a (pneumatic) control pressure 101 is received at the input port 310 of the TCL 300. Additionally, or alternatively, the controlling can be performed by receiving an electronic control signal 150. For example, in a primary mode, the brake pressure can be controlled pneumatically based on the received control pressure. In a secondary mode, the brake pressure can be controlled electronically based on the received electronic brake signal 150.

According to further embodiments, the electronic control signal(s) 150 may be adapted to activate the second solenoid valve to provide a brake pressure to the trailer independently from the control pressure 101 at the input port 310. This mode may be utilized, not to slow down the vehicle, but to stabilize the vehicle combination (e.g. stretch braking), where only the trailer shall be braked.

According to further embodiments, the electronic control signal(s) 150 may be adapted to activate the first solenoid valve 350 to decouple the control pressure 101 and to activate the second solenoid valve 460 at least once to set a predetermined brake pressure. The second solenoid valve 460 may be activated periodically to adjust a pressure level to a desired value. This mode may be utilized to set a predetermined braking force during a stop (e.g. at a bus stop or at standstill)

Like conventional TCV, the TCV 300 has in integrated park brake function, but has only a single-circuit pneumatic service brake function. Unlike conventional trailer control valves or trailer control module, the TCV 300 according to embodiments does not have two independent pneumatic service brake functions.

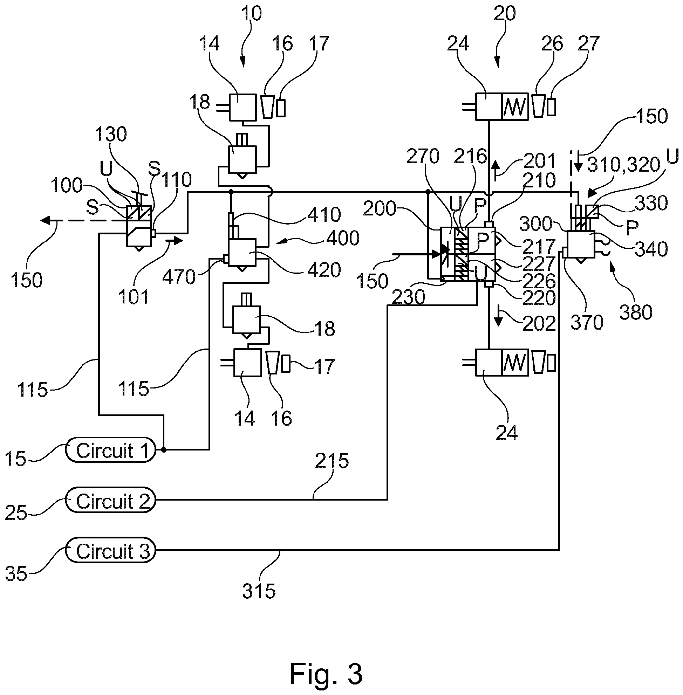

**Fig. 3** depicts an electronic brake system, EBS, according to an embodiment which is adapted to be used in a commercial vehicle such as a (long-haul) truck, a towing vehicle (with or without a trailer), a bus etc. The exemplary commercial vehicle has a front axle 10 (e.g. steered axle) with brake cylinders 14 (on both sides) and a rear axle 20 (e.g. driven axle) with respective brake cylinders 24 (on both sides). Each brake cylinder 14, 24 or each wheel is equipped with a respective wheel speed sensors 16, 26 for determining respective wheel speeds at the front axle 10 and/or the at least one rear axle 20. In addition, brake pad wear sensors 17, 27 are arranged for installed brake pads for determining respective brake pad wear values at the front axle 10 and/or the at least one rear axle 20.

The EBS may include the TCV 300 as described before with Fig. 1 and Fig. 2A, 2B. The EBS further comprises a foot brake module, FBM, 100 a pressure control module and PCM, 200.

The FBM 100 comprises a pneumatic output port 110 and an input interface 130 for receiving a brake request. The FBM 100 generates the control pressure 101 at the pneumatic output port 110 based on the brake request (e.g. based on an actuation of the driver). The PCM 200 comprises a first channel port 210, a second channel port 220, and a pneumatic backup port 230. The first channel port 210 provides a first channel output 201, the second channel port 220 provides a second channel output 202, the pneumatic backup port 230 can be fluidly connected to the first channel port 210 and/or to the second channel port 220 to provide a pneumatic brake control based on the control pressure 101 (from the FBM 100).

Advantageously, a cost-effective EBS brake system is realized by replacing the conventional pneumatic two-channel FBM and a one-channel FBM 100 with only one pressure control circuit. The FBM 100 thus provides only a single pneumatic circuit and one electric circuit. Significant costs can be saved by not forming the second pneumatic circuit (pneumatic lines and less valve components are needed in the FBM).

According to the depicted embodiment, the EBS further comprises a first air reservoir 15 for supplying the supply pressure 115 to the FBM 100, a second air reservoir 25 for supplying the second supply pressure 225 to the PCM 200, a third air reservoir 35 for providing a third supply pressure 235 as pressure supply for the TCV 300.

According to the depicted embodiment, the EBS further comprises a front axle modulator 400 with an input port 410 and a relay valve 420 connected with the first supply pressure 115 from the first air reservoir 15. The input port 410 is connected with the pneumatic output port 110 of the FBM 100 to control a brake pressure at the brake cylinders 14 on the front axle 10. In addition, pressure control valves, PCV, 18 are formed on each side of the at the front axle 10 between the front axle modulator 400 and the respective brake cylinders 14.

However, at the rear axle 20 no PCVs are formed. Instead, the first channel output 201 is provided for the brake cylinder 24 on one side the rear axle 20 and the second channel output 202 is provided for the brake cylinder 24 on the other, opposite side of the rear axle 20. Thus, the PCM 200 controls the brake pressure on the rear axle 20. For this, the PCM 200 includes an electronic controller 270 configured to receive the electronic brake signal 150 and to generate target pressures at the first channel output 201 and/or the second channel output 202 based on the electronic brake signal 150. The PCM 200 may further include a first pressure sensor 216 for sensing a pressure at the first channel port 210, a second pressure sensor 226 for sensing a pressure at the second channel port 220, a first relay valve 217, a second relay valve 227, and an inlet for a supply pressure 215. The first relay valve 217 may provide a first target brake pressure for the first channel port 210 utilizing the second supply pressure 215 and the first pressure sensor 216. The second relay valve 227 may provide a second target brake pressure for second channel port 220 utilizing the second supply pressure 215 and the second pressure sensor 226.

Thus, embodiments enable stability systems such as ABS and/or ESP and/or TCS by allowing wheel-individual interventions (brake actuations), for which the determined wheel speed information can be used. For this, the PCVs 18 at the front axle 10 can be used and at the rear axle 20 the electronic controller 270 can set separately brake pressure values at the rear brake cylinders 24 on both side by using the two independent channels (first channel output 201 and/or the second channel output 202).

Thus, embodiments implement two separate brake circuits, first brake circuit for the front axle 10 utilizing the front axle modulator 400 and a second brake circuit for rear axle 20 utilizing the PCM 200.

It is understood the number axles may differ. There may be more than one front axle 10 or more than one (driven) rear axle 20.

In addition to the described electronic control, embodiment allow for pneumatic control. For this, the PCM 200 is configured to connect the pneumatic backup port 230 with the first channel port 210 and/or with the second channel port 220. This option may apply as backup, or in other word, only when the electronic controller 270 is unable to generate the first channel output 201 and/or the second channel output 202 based on the electronic brake signals 150, the pneumatic backup port 230 will be enabled. For example, the PCM 200 may comprise a respective valve which opens the connection to the first/second channel port 210, 220.

The front axle modulator 400 as well as the TCV 300 allow for two independent, redundant operational modes. Like the front axle modulator 400, also the TCV 300 which in the primary mode of operation may be controlled pneumatically by the control pressure 101 received from the FBM 100. The relay valves 340, 420 amplify the air volume to provide a sufficient brake effect in the brake cylinders 14 and the trailer, resp.

According to embodiments, the front axle modulator 400 can be formed in the same way as the TCL 300 (see description of Fig. 1, Fig 2A, 2B). Also, the front axle modulator may be pneumatically controlled by the control pressure 101 from the FBM 100 for a relay valve 420. This may be used as primary mode of operation. A secondary (backup) mode of operation may be implemented as an electronic control. For this, the front axle modulator 400 includes a first solenoid valve, 450 to open and/or to close the input port 410, and a second solenoid valve 460 to open and/or to close a pressure supply port 470 (for the first supply pressure 115). The first solenoid valve 450 (formed as 2/2-valve) and the second solenoid valve 460 may arranged as a serial connection (see **Fig. 2A****)** or as a parallel connection (see **Fig. 2B****).** In the serial connection of **Fig. 2A** the second solenoid valve 460 is formed as a 3/2-valve. In parallel connection of **Fig. 2B** the second solenoid valve 460 is formed as a 2/2-valve.

The first solenoid valve 450 may be a monostable, where the open state is the default stable position (e.g. when no electric signal is applied). Likewise, the second solenoid valve 460 may be a monostable, where the open state is the default stable position (e.g. when no electric signal is applied). In this setting, the pneumatic control is the primary mode of operation. The first solenoid valve 450 is a hold valve to decouple the pneumatic input port 410 and to hold the state of the relay valve 420 (when the second solenoid 460 remains in its position). The second solenoid valve 460 is an apply valve that applies the pressure supply 115 to the relay valve 420 and thus activates the pressure volume increase at the brake cylinders 14.

The first solenoid valve 450 and the second solenoid valve 460 may be controlled by a controller (e.g. a brake control unit), which may set the brake pressure at the brake cylinders 14 based on the electronic brake signals 150 (i.e. an actuation level of the FBM 100 or the external brake request).

Thus, according to embodiments, the front axle modulator 400 with its pneumatic relay valve 420 has an integrated double-magnetic valve and allows various functions:
- brake pressure control by the driver,
- a pressure increase from the system,
- blocking or hold function from the system,
- release the pressure to the level of the input pressure from driver.

The solenoid valves 450, 460 control the pressure of the relay piston and thus control the pressure valve at the axle pressure without using the PCVs 18. Because an exhaust port is missing, the pressure set by the driver through the input interface 130 represents a lower limit for the pressure applicable at the control port of the relay valve 420.

The FBM 100 may have only a single pneumatic channel and a stroke sensor to measure the driver brake request and to generate an electronic brake signal 150.

On the other hand, the PCM 200 includes an integrated central controller 270 (an electronic control unit, ECU) and a two-channel pressure modulator.

Embodiments thus provide all functions of an electronic brake system. In particular, also an external brake requests (e.g. from adaptive cruise control, ACC, or an hillstart aid, HSA), which often request axle or trailer brake pressure. Likewise, ESP interventions to brake the vehicle itself selectively and/or the trailer can be controlled accordingly.

According to embodiments, the PCM 200 can used for load dependent brake force at the rear axle(s) 20. For this, the primary electronic control can set the brake force accordingly.

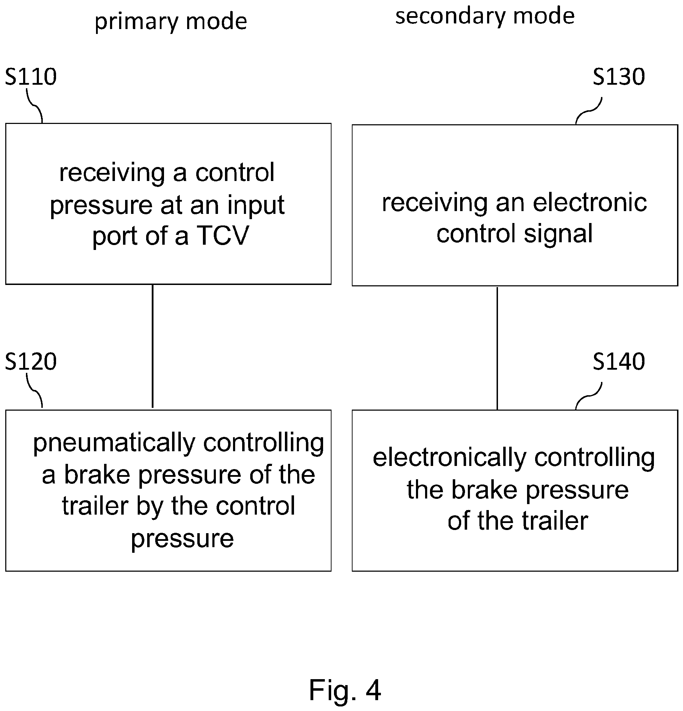

**Fig. 4** depicts a schematic flow diagram of a method for controlling a trailer brake pressure in a commercial vehicle with a trailer control valve, TCV, 300 as described in this disclosure. The method comprises the steps of:
- receiving S110 a control pressure at an input port of a trailer control valve based on the brake request in a primary mode; and
- pneumatically controlling S120 a brake pressure of the trailer by the control pressure in the primary mode of operation; or
- receiving S130 an electronic control signal in the secondary mode of operation; and
- electronically controlling S140 the brake pressure of the trailer based on the received electronic brake signal to a target value in the secondary mode of operation
wherein the electronic brake signal 150 being an external brake request or being generated by the FBM 100.

It is understood that the steps do not need to be executed simultaneously but can be performed at different times. For example, either the primary mode is performed or the secondary mode.

Optionally, the received electronic control signal may trigger at least one of the following:
- activating the second solenoid valve 360 to provide a brake pressure to the trailer independently from the control pressure 101 at the input port 310 (to brake the trailer independently from a braking of the towing vehicle);
- activating the first solenoid valve 350 to decouple the control pressure 101 and activating the second solenoid valve 460 at least once to set a predetermined brake pressure (to set a predetermined brake force, e.g. at a standstill to prevent a roll-away).

Embodiments provide the following advantageous effects:
Embodiments provide a separation of different brake circuits. The circuits are protected in that a failure in the circuit at the front axle modulator still allows to control the trailer pressure accurately. For this, the TCV 300 can use its pressure sensor 300. Its connection to the third supply pressure 315 is different from the supply pressure provided at the front axle and allows to set the trailer pressure accordingly - even though the brake circuit at the front axle has a failure.

The different supply circuit may also be considered to realize a second circuit in the trailer control.

The front axle modulator 400 is mainly controlled with pneumatic control line pressure (control pressure 101) from the FBM 100. For the electronic control the first and second solenoids 450, 460 are used to provide pressure to the front axle 10 (i.e. for ESP, HSA).

The novel TCV 300 is another part of the cost-effective electronic brake system. The trailer control pressure is mainly controlled (as primary operation mode) with pneumatic control line pressure (the control pressure 101) from the FBM 100. For electronic control the first and second solenoids 350, 360 of the TCV 300 are used to provide pressure to the trailer control line, e.g. as backup or secondary operation mode when there is failure in pneumatic control.

The electronic control can be used for ESP, HSA and other assist functions. It also be used as a backup for failure in the pneumatic control circuit from the FBM 100. For this, the additional pressure sensor 330 can be employed to realize a closed loop control of the electronic pressure (a so-called 1-electronic-circuit). On one side, this realizes the second control circuit for the trailer and, on the other side, it replaces the second pneumatic circuit which is used in conventional TCVs. Therefore, the brake system mainly controls (e.g. in primary mode of operation) the vehicle or the vehicle combination (with a trailer) in the pneumatic control pressure at front axle 10 and the trailer. The rear axle 20 can be controlled in the primary mode of operation with the electronic control (e.g. utilizing the electronic controller 270 and solenoid valve comprised in the PCM 200).

According to further embodiments, the TCV 300 can control the trailer mainly in electronic control mode. However, for this, the pressure is limited on the control pressure from the FBM100 (i.e. the driver brake application), because the TCV 300 cannot actively exhaust air (see Fig. 3A and Fig. 3B), but can only increase the pressure to the trailer compared to the input from FBM 100 (control pressure 101).

According to further embodiments, the front axle modulator 400 comprises an additional pressure sensor to measure an axle pressure and control the front axle pressure mainly in electronic mode (e.g. a primary mode of control). With this the system, the pressure at the front axle 10 can deliberately be set differently or higher than the pressure at FBM 100 (e.g. the control pressure 101) and/or at the rear axle. Therefore, a load-dependent braking force can be set.

According to further embodiments, the electric signal characteristic curve of the stroke or position sensor in the FBM 100 could create a predominant or higher signal for the calculated output pressure 101 in a way that the FBM 100 pneumatic pressure is smaller than the usual pressure in the axle or trailer. This embodiment allows a pressure offset in the characteristic curve which is used to determine the output pressure (or the control pressure 101). Thus, the FBM 100 can output a lower control pressure 101 to achieve the same braking effect. As consequence, the first and second solenoids 350, 360, 450, 460 can lower the pressure to a lower level. The available pressure bandwidth (or control range) is increased by this offset in the characteristic curve. Thus, an increased pressure range in which the front axle modulator 400 and/or the TCV 300 is achieved.

The description and drawings merely illustrate the principles of the disclosure. It will thus be appreciated that those skilled in the art will be able to devise various arrangements that, although not explicitly described or shown herein, embody the principles of the disclosure and are included within its scope.

Functions of various elements shown in the figures may be provided through the use of dedicated hardware as well as hardware capable of executing software in association with appropriate software. Moreover, any entity described herein as "device", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

10 front axle
14 front brake cylinders
16, 26 wheel speed sensors
17, 27 brake pad wear sensors
18 pressure control valve(s)
20 at least one rear axle
24 rear brake cylinders
100 foot brake module (FBM)
101 control pressure
110 pneumatic output port
115,215,315 pressure supply
130 input interface
150 electronic brake signal
200 pressure control module (PCM)
201 first channel output
202 second channel output
210 first channel port
220 second channel port
216,226 pressure sensors
217,227 relay valves
215 second supply pressure,
230 pneumatic backup port
270 electronic controller
300 trailer control valve (TCV)
310 pneumatic input port
320 electronic input port
330 pressure sensor
340 relay valve
343 exhaust port
345 control port (of relay valve)
350 first solenoid valve
351,361 first port
352,362 second port
360 second solenoid valve
363 third port
370 pressure supply port
380 trailer coupling terminal
390 parking brake input port
400 front axle modulator
410 input port
420 relay valve
425 control port
450 first solenoid valve
460 second solenoid valve
470 pressure supply port

## Claims

1. A trailer control valve (300) for a towing vehicle configured to couple to a trailer, **characterized by:**
a pneumatic input port (310) for receiving a control pressure (101);
an electronic input port (320) for receiving an electronic brake signal (150);
a pressure sensor (330);
a relay valve relay valve (340) with a control port (345);
a first solenoid valve (350) and a second solenoid valve (360);
a pressure supply port (370); and
a trailer coupling terminal (380) for providing a brake pressure and/or a supply pressure to the trailer,
wherein the first solenoid valve (350) and the second solenoid valve (360) are arranged
- to forward, in a primary mode, the control pressure (101) to the control port (345) of the relay valve (340), and
- to interrupt, in a secondary mode, the control pressure (101) and to connect the control port (345) of the relay valve (340) to the pressure supply port (370) based on the electronic brake signal (150) and an actual pressure sensed by the pressure sensor (330).

2. The trailer control valve (300) according to claim 1, the first solenoid valve (350) and the second solenoid valve (360) are monostable valves controllable via the electronic input port (320) to allow a stable position and an activated position,
wherein the first solenoid valve (350) is a 2/2-valve with a first port (351) connected with pneumatic input port (310) and a second port (352), the first port (351) being connected with the second port (352) in the stable position and being disconnected in the activated position;
wherein the second solenoid valve (360) is a 3/2-valve with a first port (361) connected with second port (352) of the first solenoid valve (350), a second port (362) connected with the control port (345) of the relay valve (340), and a third port (363) connected with the pressure supply port (370), wherein the second solenoid valve (360) is adapted
to connect its first port (361) with its second port (362) in its stable position, and
to connect its third port (363) with its second port (362) in its activated position.

3. The trailer control valve (300) according to claim 1, the first solenoid valve (350) and the second solenoid valve (360) are monostable valves controllable via the electronic input port (320) to allow a stable position and an activated position,
wherein the first solenoid valve (350) is a 2/2-valve with a first port (351) connected with pneumatic input port (310) and a second port (352) connected with the control port (345) of the relay valve (340), wherein the first solenoid valve (350) is adapted to connect its first port (351) with its second port (352) in its stable position, and to disconnect its first port (351) and its second port (352) in its activated position;
wherein the second solenoid valve (360) is a 2/2-valve with a first port (361) connected with the second port (352) of the first solenoid valve (350), a second port (362) connected with the pressure supply port (370), wherein the second solenoid valve (360) is adapted
to disconnect its first port (361) and its second port (362) in its stable position, and
to connect its first port (361) with its second port (362) in its activated position.

4. The trailer control valve (300) according to any one of claims 1 to 3, wherein the relay valve (340) comprises an exhaust port (343) to exhaust the trailer coupling terminal (380) based on a pressure at the control port (345), the trailer control valve (300) being adapted to exhaust the control port (345) only through the pneumatic input port (310).

5. The trailer control valve (300) according to any one of claims 1 to 4, further comprising a parking brake input port (390) for receiving a parking brake request, the parking brake input port (390) being adapted to activate the relay valve (340) to provide a parking brake function for the trailer.

6. A brake system for a commercial vehicle adapted to couple to a trailer, **characterized by:**
a trailer control valve (300) according to any one of claims 1 to 5; and
a brake controller configured to provide the electronic brake signal (150) based on a brake request.

7. The brake system according to claim 6, further comprising:
- a foot brake module, FBM, (100) comprising a pneumatic output port (110) and an input interface (130) for receiving the brake request, the FBM (100) being configured to generate the control pressure (101) at the pneumatic output port (110) based on the brake request; and
- a pressure control module, PCM, (200) with a first channel port (210), a second channel port (220), and a pneumatic backup port (230), the first channel port (210) being configured to provide a first channel output (201), the second channel port (220) being configured to provide a second channel output (202), the pneumatic backup port (230) is fluidly connectable to the first channel port (210) and/or to the second channel port (220) to provide a pneumatic backup brake control based on the control pressure (101).

8. The brake system according to claim 7, wherein the commercial vehicle includes a front axle (10) and at least one rear axle (20), the first channel port (210) is configured to provide the first channel output (201) for one side of the at least one rear axle (20) and the second channel port (220) is configured to provide the second channel output (202) for the other side of the at least one rear axle (20),
the brake system further comprising a front axle modulator (400) with an input port (410) and a relay valve (420) with a control port (425) connected to the input port (410) to control a brake pressure on the front axle (10), wherein the input port (410) is connected with the pneumatic output port (110) of the FBM (100).

9. The brake system according to claim 8, wherein the front axle modulator (400) includes a pressure supply port (470), a first solenoid valve (450) to open and close the input port (410), and a second solenoid valve (460) to open and close the pressure supply port (470), wherein the first solenoid valve (350) and the second first solenoid valve (360) are arranged as a serial connection or as a parallel connection and are configured to
- forward, in the primary mode, the control pressure (101) to the control port (425) of the relay valve (420), and
- interrupt, in the secondary mode, the control pressure (101) and to connect the control port (425) of the relay valve (420) to the pressure supply port (470) based on the electronic brake signal (150).

10. The brake system according to claim 8 or claim 9, wherein the PCM (200) includes an electronic controller (270) configured to receive the electronic brake signal (150) and to generate a target pressure at the first channel output (201) and/or at the second channel output (202) based on the electronic brake signal (150).

11. The brake system according to claim 10, wherein the PCM (200) further includes a first pressure sensor (216) for sensing a pressure at the first channel port (210), a second pressure sensor (226) for sensing a pressure at the second channel port (220), a first relay valve (217), a second relay valve (227), and an inlet for a second supply pressure (215),
wherein the first relay valve (217) is configured to provide a first target brake pressure for the first channel port (210) utilizing the second supply pressure (215) and the first pressure sensor (216), and
wherein the second relay valve (227) is configured to provide a second target brake pressure for second channel port (220) utilizing the second supply pressure (215) and the second pressure sensor (226).

12. The brake system according to any one of claims 8 to 11, further comprising at least one of the following:
- a first air reservoir (15) for supplying a first supply pressure (115) to the FBM (100) and to the front axle modulator (400),
- a second air reservoir (25) for supplying a second supply pressure (225) to the PCM (200),
- a third air reservoir (35) for providing a third supply pressure (235) as pressure supply for the TCV (300),
- one or more wheel speed sensors (16, 26) for determining one or more respective wheel speeds at the front axle (10) and/or wheel speeds at the at least one rear axle (20),
- one or more brake pad wear sensors (17, 27) for determining one or more respective brake pad wear values at the front axle (10) and/or at the at least one rear axle (20),
- one or more pressure control valves, PCV, (18) at the front axle (10), each PCV (18) is configured to adjust a pressure at a respective wheel.

13. A vehicle, in particular a commercial vehicle configured to couple to at least one trailer, with a brake system according to any one of the preceding claims.

14. A method for controlling a trailer brake pressure in a commercial vehicle with a trailer control valve, TCV, (300) according to any one of claims 1 to 5,
**characterized by:**
- receiving (S110) a control pressure (101) at an input port (310) of a trailer control valve (300) based on the brake request in a primary mode of operation;
- pneumatically controlling (S120) a brake pressure of the trailer by the control pressure (101) in the primary mode of operation; or
- receiving (S130) an electronic control signal (150) in a secondary mode of operation;
- electronically controlling (S140) the brake pressure of the trailer based on the received electronic brake signal (150) to a target value in the secondary mode of operation,
wherein the electronic brake signal (150) is an external brake request or is generated by the FBM (100).

15. The method according to claim 14, wherein the received electronic control signal (150) is adapted to trigger at least one of the following:
- activating the second solenoid valve (360) to provide a brake pressure to the trailer independently from the control pressure (101) at the input port (310);
- activating the first solenoid valve (350) to decouple the control pressure (101) and activating the second solenoid valve (460) at least once to set a predetermined brake pressure.
